# EUROPEAN PATENT APPLICATION

(11) **EP 2 487 655 A1**
(43) Date of publication of application: **15.08.2012**
(21) Application number: 11305154.4
(22) Date of filing: 14.02.2011
(51) Int. Cl.: G07F 7/10, H04W 8/18

(54) **Method of customizing an electronic token**

(71) Applicant: Gemalto SA, 92190 Meudon (FR)
(72) Inventor: Silvestre, Thierry, 13008 Marseille (FR); Faure, Frédéric, 13260 Cassis (FR); Dao, Frédéric, 13008 Marseille (FR)

(57) **Abstract**

The invention is a method of customizing an electronic token intended to be connected to a wireless device. The device comprises an identifier and is able to execute an Attention command which is callable through an interface. The method comprises the following steps of:
- getting the identifier from the device to the token,
- requesting the interface by sending the identifier from the token to a distant machine, the requesting step being performed by means of a channel established by the device,
- storing and registering the interface in the token, and
- requesting the execution of the Attention command from the token by using the interface.

## Description

### (Field of the invention)

The present invention relates to methods of customizing an electronic token. It relates particularly to methods of customizing the capability of an electronic token after its personalization step.

### (Background)

Electronic tokens are portable electronic devices with limited resources. In general, electronic tokens comprise a plurality of memories of different type. For example, they may comprise memory of RAM, ROM, EEPROM or Flash type. Smart cards, and particularly SIM cards, are electronic tokens.

There is a need for using electronic tokens in the Machine-to-Machine market, also named M2M market. M2M market requires hardware/software components able to run in environment conditions covering a large scope and during a long time. Typically, these components may be able to comply with a temperature range from -40°C up to +125°C, a high level humidity. These components may also comply with a lifespan up to 15 years.

M2M market uses wireless modules which are integrated in systems for providing M2M communicating services. The wireless modules may comprise electronic tokens such as SIM cards. A wireless module is able to execute a set of Attention commands (also named AT command) as defined by GSM specifications 07.05 and 07.07 or 3GPP specification TS 27.007. Even if some AT commands are standardized, the specifications allow to implement proprietary AT commands. As a consequence, the set of supported AT commands may differ from a wireless module to another one. Usually, AT commands are sent by a M2M equipment which is connected to the wireless M2M module. For instance, such a M2M equipment may be an automatic vending machine or a water meter.

The Standard 3GPP specification TS 11.14 defines a proactive command "Run AT command" which allows an electronic token to launch the execution of an AT command into a wireless module.

It is known to store applicative data in a smart card before or during the personalization stage of the card.

However, as the electronic token may be associated to any wireless device, the future usage of the wireless device and of the token may not be known at welding stage. The electronic token may be either welded into a wireless device or temporary associated to a wireless device.

As a consequence, the set of available AT commands cannot be optimized to the future usage of each electronic token. There is a need for providing a solution which allows customizing AT commands in an electronic token.

### (Summary of the Invention)

An object of the invention is to solve the above mentioned technical problem.

The object of the present invention is a method of customizing an electronic token which is intended to be connected to a wireless device. The wireless device comprises an identifier and is capable of executing an Attention command which is callable through an interface. The method comprises the following steps:
a) getting the identifier from the wireless device to the electronic token.
b) requesting the interface by sending the identifier from the token to a distant machine, the requesting step being performed by means of a channel established by the connected wireless device,
c) storing and registering the interface in the electronic token,
d) requesting execution of the Attention command from the token by using the interface.

Advantageously, the step of requesting the execution of the Attention command (step d)) may be triggered by an application program embedded into the electronic token.

The method may comprise the step of sending a response data corresponding to the execution of the Attention command to the token and providing the application program with the response data.

Advantageously, the electronic token may comprise a configuration data which reflects the presence of the application program into the token. The configuration data may be sent to the distant machine when requesting the interface.

The electronic token may be a subscriber identity card, the channel may be an Over-The-Air channel and the wireless device may be a Machine-To-Machine module.

Another object of the invention is an electronic token which is intended to be connected to a wireless device. The wireless device comprises an identifier and is capable of executing an Attention command. The Attention command is callable through an interface. The electronic token comprises:
- first means adapted to exchange data with a distant machine by means of a channel established by said wireless device,
- second means adapted to get the identifier from the wireless device,
- third means adapted to request the interface by sending the identifier to the distant machine,
- fourth means adapted to store the interface into the token, and
- fifth means adapted to register the interface and to request execution of the Attention command by using said interface.

Advantageously, the electronic token may comprise a configuration data reflecting the presence of an application program embedded in the token. The third means may be capable of sending the configuration data to the distant machine when requesting the interface.

The electronic token may be a subscriber identity card, the channel may be an Over-The-Air channel and the identifier may be the International Mobile Equipment Identity.(IMEI)

Another object of the invention is a wireless device which comprises:
- means able to establish a channel with a distant machine,
- an electronic token as described above, said electronic token being connected to the device by means of a welding or in a removable way.

Another object of the invention is a system comprising wireless device, an electronic token, a distant machine. The electronic token is an electronic token as described above. The wireless device is a wireless device as described above. The distant machine comprises a selecting means able to select the interface by using the identifier.

Advantageously, the system may comprise a machine which contains an antenna and a power supply. The wireless device may be connected to the machine. The channel may be a wireless channel. The wireless device may use said power supply and antenna for establishing the channel.

### (Brief description of the drawings)

Other characteristics and advantages of the present invention will emerge more clearly from a reading of the following description of a number of preferred embodiments of the invention with reference to the corresponding accompanying drawings in which:
- Figure 1 is example of system comprising a distant machine, a M2M equipment, a wireless device and an electronic token according to the invention;
- Figure 2 depicts schematically an example of architecture of a SIM card as an example of an electronic token according to the invention;
- Figure 3 is an example of step sequence for customizing the electronic token ET according to the invention; and
- Figure 4 is another example of step sequence between a wireless device and an electronic token.

### (Detailed description of the preferred embodiments)

The invention may apply to any types of electronic token able to exchange data with a distant machine by means of a channel (either wireless or wire channel) established by a connected device. In this specification, the electronic token is a SIM card but it could be any other kind of electronic token comprising both subscriber identity data and means for exchanging data through a channel via a connected wireless device. The subscriber identity data may be a machine identity data. The electronic token may be a Universal Integrated Circuit Card (UICC).

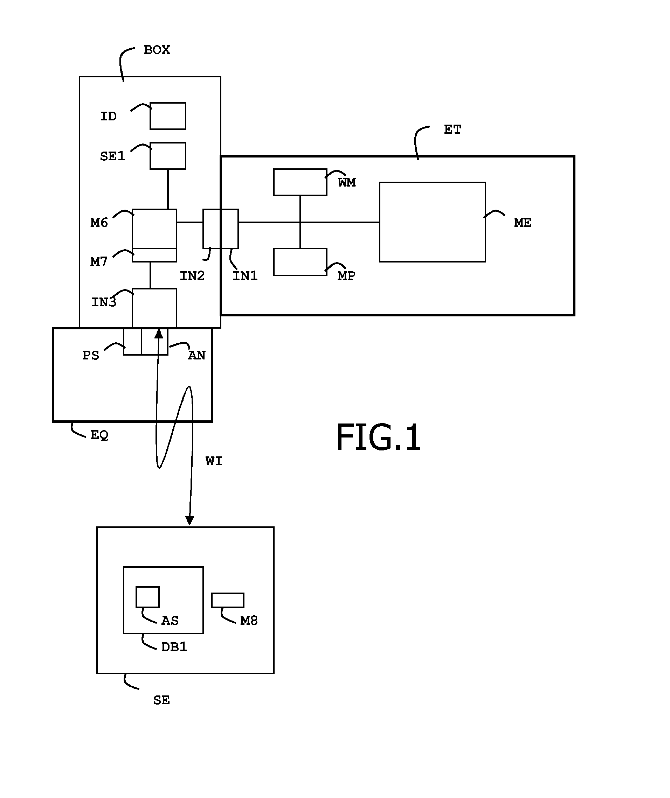

**Figure 1** shows an example of system comprising a distant machine SE, a M2M equipment EQ, a wireless device BOX and an electronic token ET according to the invention.

The distant machine SE may be a server able to exchange data by means of a wireless channel WI. The wireless channel WI may be the Over The Air mechanism - known as OTA ― defined by the GSM 03.40, GSM 03.48 and/or ETSI/SCP - 3GPP - 3GPP2 standards. The distant machine SE may be connected to a private or public network and communicate with the token ET via an OTA server.

The distant machine SE comprises a database DB1 and a means M8 able to select an item stored into the database DB1 according to an input parameter received through the wireless channel WI.

The database DB1 contains a plurality of AT command interfaces. An interface defines the syntax (or format) of the corresponding AT command. In particular, the database DB1 contains the interface AS of the AT command AT1.

For instance, the AT1 command may be a "GetTemperature" command which aims at retrieving the current temperature from the wireless module BOX. The corresponding interface AS may be "AT^SCTM?" for example. The AT command interface may also be "AT+CSQ" for the function providing the Quality Of Signal.

Alternatively, the database DB1 may be store in another server and the machine SE may have access to the database DB1.

The M2M equipment EQ may be any machines which require a M2M service. For example the equipment EQ may be a gas meter, an automatic drink distributor or a car.

Advantageously, the M2M equipment EQ comprises an antenna AN and a power supply PS. The antenna AN is intended to allow the device BOX to establish the wireless channel WI. The power supply PS is intended to provide the device BOX with energy.

Alternatively, the wireless device BOX may comprise its own antenna and power supply.

The wireless device BOX comprises two communication interfaces IN2 and IN3, an electronic token ET connected to the interface IN2, a temperature sensor SE1, an identifier ID and two means M6 and M7. The electronic token ET may be a SIM/USIM card. The means M7 is able to establish a wireless channel WI with the distant machine SE. The means M6 is able to execute the Attention command AT1. The AT command interface AS must be used to request the execution of the ATtention command AT1 by the means M6. The identifier ID is a data specific to the wireless device BOX. The identifier ID may be a serial number. The identifier ID may comply with the International Mobile Equipment Identity (IMEI) format. The identifier ID may be a part of an IMEI.

The interface IN3 allows the device BOX to communicate with the M2M equipment EQ.

Advantageously, the interface IN3 may access the antenna AN and the power supply PS.

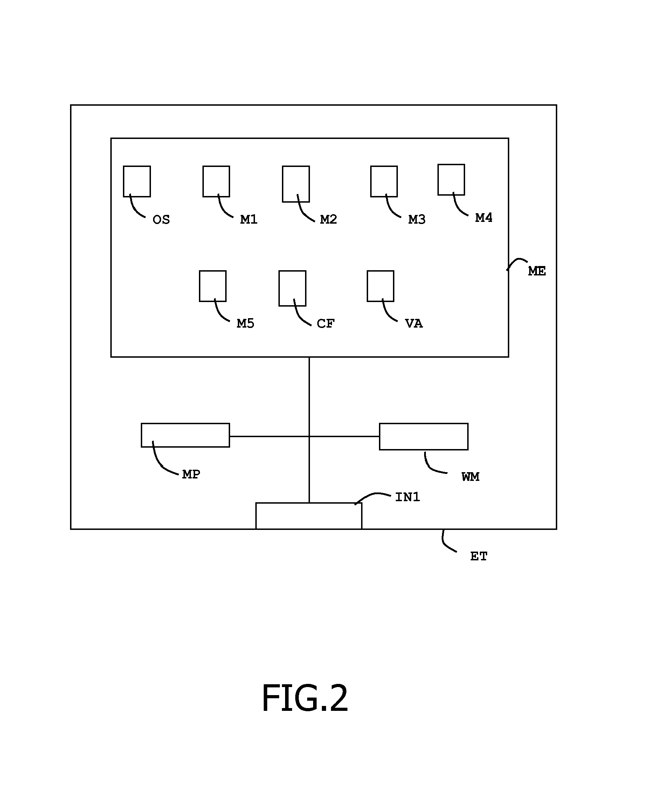

The electronic token ET may be a SIM card (also named MIM for M2M SIM) or any equivalent token. The electronic token ET comprises in interface IN1, a microprocessor MP, a working memory WM and a non volatile memory ME. An example of a detailed view of the electronic token ET is provided at Figure 2.

The wireless device BOX may comprise a plurality of sensors. Advantageously, a microcontroller may be connected to the sensors in order to pre-compute the data provided by the sensors.

Advantageously, the electronic token ET is directly plugged in the wireless device BOX. Alternatively, the electronic token may be plugged in the M2M equipment EQ and the M2M equipment EQ has a means allowing a communication between the electronic token ET and the wireless device BOX.

**Figure 2** shows an example of architecture of a SIM card as an example of a electronic token according to a preferred embodiment of the invention. The SIM card ET contains a microprocessor MP, a communication interface IN1, a non volatile memory ME, and a working memory WM like a RAM. The communication interface IN1 is intended to be connected to a wireless device and allows exchanging data with the connected wireless device. The memory ME may be an EEPROM or Flash memory. The memory ME contains an operating system OS, an application program VA, a configuration data CF and five means M1 to M5. The application program VA may be an applet or any software application. The configuration data CF reflects the presence of the application program VA into the token ET. The means M1 is capable of exchanging data with a distant machine by means of a wireless channel established by a connected wireless device. For example, the means M1 may be able to use the Over The Air mechanism.

The means M2 is capable of getting the identifier of a connected wireless device.

The means M3 is capable of requesting an AT command interface by sending an identifier to a distant machine through a wireless channel.

Advantageously, the means M3 is able to request if any upgrade is available for AT command interface.

Alternatively, the means M3 is able to request if a specific AT command interface is available.

The means M4 is capable of storing an AT command interface into the token ET. For example the means M4 may be a library intended to store a plurality of AT command interfaces.

The means M5 is capable of registering an AT command interface. The means M5 is capable of requesting the execution of an AT command by using said interface. For example the means M5 may be an agent - also called "AT command register" - able to permanently store a link between an AT command interface and a preset index.

For instance, the interface AS of the "GetTemperature" command may stored into the means M4. The index known by the application program VA for a "GetTemperature" function may be "0x0A" and the means M5 may be able to store a link between "0x0A" and the interface AS. During the registering phase the interface AS may give its identity to the means M5. For instance the interface AS may provide its identifier (like an AID) to the means M5.

When the application program VA requests a call to 0x0A for getting the current temperature, the means M5 invokes the corresponding interface AS in the means M4.

The operating system OS may comprise a virtual machine.

The microprocessor MP cooperates with the working memory WM and is intended to run the operating system OS. The five means M1 to M5 may be either software applications run by the microprocessor MP or hardware designed. These five means may be implemented as five distinct elements or merged in one or several elements.

In a preferred embodiment, the five means M1 to M5 are implemented as five different software components.

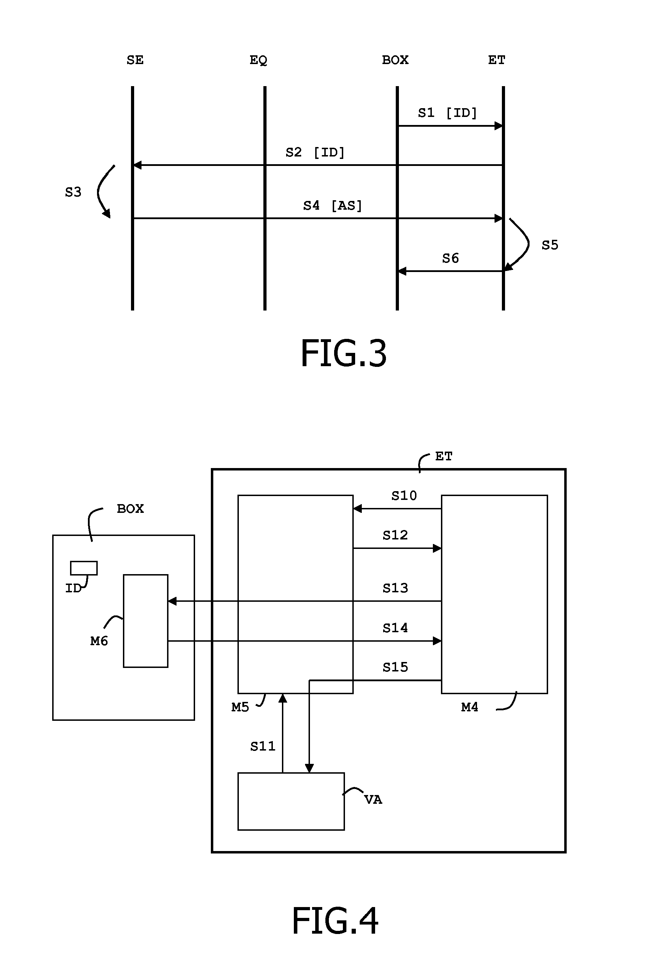

**Figure 3** shows an example of step sequence for customizing the electronic token ET according to the invention.

At step S1, the wireless module BOX sends its identifier ID to the token ET. For instance, the identifier ID may be sent in response to a previous request sent by the electronic token ET.

Then the electronic token ET sends the identifier ID to a distant machine SE through a wireless channel WI established via the wireless device BOX at step S2.

At step S3, the means M8 of the distant machine selects the set of AT command interfaces which are supported by the module BOX. The means M8 uses the identifier ID for identifying the class or type of wireless device. The selected set may comprise one or several AT command interfaces. If the selected set is empty, a specific message is sent to the token ET. Else the selected interfaces are extracted from the database DB1 and sent to the token ET through the wireless channel WI at step S4.

At step S5, the received interfaces are stored into the token ET. Then the received interfaces are registered into the token ET.

At step S6, the token ET requests the execution of an AT command into the device BOX by using the corresponding registered interface.

Advantageously, the electronic token ET may comprise a configuration data CF which reflects the presence of the application program VA into the token ET. The configuration data CF may also contain the type of the token and the list of applications (i.e. a list of Application IDentifiers also named AID) present into the token. At step S2, the electronic token ET may send the identifier ID and the configuration data CF to the distant machine SE through the wireless channel WI. Thus the means M8 may select the set of AT command interfaces which are supported by the wireless module BOX and which are useful for the application program VA. Consequently, the set of selected AT command interfaces may be adapted to the real need of the electronic token. This selection allows saving memory space into the token since no useless interface is stored into the token. This selection allows saving the bandwidth of the wireless channel WI since no useless interface is sent through the channel WI.

Advantageously, the configuration data CF may reflects the presence of a set of application programs installed into the token.

**Figure 4** shows another example of step sequence between a wireless device and an electronic token.

The sequence described at Figure 3 is assumed to be already run until the middle of step S5. At this point, the AT command interface AS is assumed to be stored into the means M4. At step S10, the index corresponding to the interface AS is sent to the means M5 and registered into the means M5. Each command AT interface (service) will be downloaded via OTA into the means M4. At the end of the downloading phase, the means M4 sends to the means M5 the list of index of the recorded commands.

Alternatively, each command AT interface may be downloaded into the means M4 with an associated function item. Then the means M4 sends the recorded function items to the means M5 and the means M5 registers the association between each function item and its corresponding index. (The indexes are assumed to be known by the application program VA.)

The registering step aims at indicating that a new function is now available in token side.

Advantageously, the registering phase may be automatically triggered when the interface AS is downloaded into the token ET. When the means M4 has correctly received a new AT command interface (i.e. a new service), it registers this new corresponding index to the means M5.

At step S11, the application program VA requests a call to the AT command AT1. This is done by sending a call (0x0B) to the means M5.

For instance, the command AT1 may be the "GetHumidity" command. The means M5 identifies the AT command interface AS which corresponds to the received call (0x0B). Then at step S12, the means M5 invoke the interface AS in the means M4. During the registering phase the means M5 receives the way to invoke the means M4.

At step S13, the means M4 requests the launching of the execution of the command AT1 ("GetHumidity") into the wireless device BOX. This request is carried out through the proactive command "Run AT Command". In the wireless module BOX, the means M6 gets the current Humidity value from a dedicated sensor embedded into the device BOX.

At step S14, the wireless device BOX sends the response corresponding to the execution of the command AT1 ("GetHumidity"). The response contains the measured value of the humidity. For instance a message containing the response may be sent by the means M6. The means M4 receives then parses and analyzes the message for extracting the response to be forwarded to the application program VA. The response may be sent by the means M4 to the application program VA through the means M5 at step 15. The means M4 may request the response to the device BOX via an internal data buffer (stored in the memory ME or in the memory WM) and propagates the response to the application program VA via the means M5. (For instance this may be implemented via usual Java mechanism).

Then the application program VA may use the measured humidity value. For instance, the measure value may be stored into the token or send to a distant server through a wireless channel.

Although the above example is based on a Humidity sensor, the invention may apply to any kinds of sensors (Temperature, light, pressure, security, etc.) or functions (e.g. counters) supported by the wireless device BOX. The invention also applies to wireless devices that are able to access sensors embedded into a connected M2M equipment.

In the above-described examples, the channel used between the token and the distant machine is a wireless channel. Alternatively, the channel may use physical cable. For instance the channel may be established through a private network or a public network like Internet.

An advantage of the invention is to allow customizing the set of available AT command after the electronic token deployment on the field.

Another advantage of the invention is to provide a technical solution wherein the management of the M2M application is independent of the M2M equipment. The couple wireless device/token is able to handle the M2M application independently.

## Claims

1. A **method** of customizing an electronic token (ET), said electronic token (ET) being intended to be connected to a wireless device (BOX), said wireless device (BOX) comprising an identifier (ID) and being able to execute an Attention command (AT1) which is callable through an interface (AS), said method comprising the following step:
a) getting the identifier (ID) from the wireless device (BOX) to the electronic token (ET),
**characterized in that** said method comprises the further steps:
b) requesting the interface (AS) by sending said identifier (ID) from the token (ET) to a distant machine (SE), said requesting step being performed by means of a channel (WI) established by said connected wireless device (BOX),
c) storing and registering said interface (AS) in the electronic token (ET),
d) requesting execution of the Attention command (AT1) from the token (ET) by using the interface (AS).

2. A method according to claim 1, wherein the step d) is triggered by an application program (VA) embedded into the electronic token (ET).

3. A method according to claim 2, wherein said method comprises the further step:
e) sending a response data corresponding to the execution of the Attention command (AT1) to the token (ET) and providing the application program (VA) with the response data.

4. A method according to one of claims 1 to 3, wherein said electronic token (ET) comprises a configuration data (CF) reflecting the presence of said application program (VA) into the token (ET) and wherein the configuration data (CF) is sent to the distant machine (SE) when requesting the interface (AS).

5. A method according to one of claims 1 to 4, wherein said electronic token (ET) is a subscriber identity card, wherein the channel (WI) is an Over-The-Air channel and wherein the wireless device (BOX) is a Machine-To-Machine module.

6. An electronic **token** (ET) intended to be connected to a wireless device (BOX), said device (BOX) comprising an identifier (ID) and being able to execute an Attention command (AT1), said Attention command (AT1) being callable through an interface (AS), said electronic token (ET) comprising:
- first means (M1) for exchanging data with a distant machine (SE) by means of a channel (WI) established by said device (BOX),
- second means (M2) for getting the identifier (ID) from the wireless device (BOX),
**characterized in that** said token (ET) comprises:
- third means (M3) adapted to request the interface (AS) by sending said identifier (ID) to the distant machine (SE),
- fourth means (M4) adapted to store the interface (AS) into the token (ET), and
- fifth means (M5) adapted to register the interface (AS) and to request execution of the Attention command (AT1) by using said interface (AS).

7. An electronic token (ET) according to claim 6, wherein said electronic token (ET) comprises a configuration data (CF) reflecting the presence of an application program (VA) embedded in the token (ET) and wherein third means (M3) is adapted to send the configuration data (CF) to the distant machine (SE) when requesting the interface (AS).

8. An electronic token (ET) according to one of claims 6 to 7, wherein said electronic token (ET) is a subscriber identity card, wherein said channel (WI) is an Over-The-Air channel and wherein said identifier (ID) is the International Mobile Equipment Identity.

9. A wireless **device** (BOX), comprising:
- means (M7) able to establish a channel (WI) with a distant machine (SE),
- an electronic token (ET),
**characterized in that** said electronic token (ET) is an electronic token according to claim 6 and **in that** said electronic token (ET) is connected to said device (BOX) by means of a welding or in a removable way.

10. A **system** comprising a wireless device (BOX), an electronic token (ET), a distant machine (SE), **characterized in that** said electronic token (ET) is an electronic token according to claim 6, **in that** said wireless device (BOX) is a wireless device according to claim 9 and **in that** said distant machine (SE) comprises a selecting means (M8) adapted to select the interface (AS) by using the identifier (ID).

11. A system according to claims 10 wherein said system comprises a machine (EQ) comprising an antenna (AN) and a power supply (PS), wherein said wireless device (BOX) is connected to the machine (EQ), wherein the channel (WI) is a wireless channel and wherein the wireless device (BOX) uses said power supply (PS) and said antenna (AN) for establishing the channel (WI).
